# EUROPÄISCHE PATENTANMELDUNG

(11) **EP 0 960 840 A2**
(43) Veröffentlichungstag der Anmeldung: **01.12.1999**
(21) Anmeldenummer: 99110311.0
(22) Anmeldetag: 27.05.1999
(51) Int. Cl.: B65G 23/06

(54) **Zahnriemenantrieb mit Mitnehmern**

(30) Priorität: 29.05.1998 DE 19824252
(71) Anmelder: SIEMENS AKTIENGESELLSCHAFT, 80333 München (DE)
(72) Erfinder: Schuster, Rudolf, 85551 Kirchheim (DE); Schönbach, Hartmut, 80935 München (DE)

(57) **Zusammenfassung**

Damit die Mitnehmer (4) bei hohen dynamischen Belastungen nicht vom Zahnriemen (3) abgerissen werden, ist für jeden Mitnehmer (4) auf der Zahnseite des Zahnriemens (3) ein einen Zahn über die gesamte Breite im Profil sowie stirnseitig umschließendes Befestigungselement (2) vorgesehen, das über die Riemenbreite auf beiden Stirnseiten hinausragt. Die obere Begrenzung der seitlich herausragenden Teile liegt in der Ebene des Zahnriemenrückens. Der jeweilige Mitnehmer (4) ist mit den beiden seitlichen Teilen des Befestigungselementes (2) mittels Verbindungselementen verbunden. Die Zahnscheiben (1) besitzen entsprechende Aussparungen für die Befestigungselemente (2).

## Beschreibung

Die Erfindung betrifft einen Zahnriemenantrieb mit Mitnehmern. Diese Zahnriemen, die auf der Innenseite die Zähne und auf der Außenseite die Mitnehmer aufweisen, dienen zum Transport, insbesondere zum horizontalen Transport von Gegenständen. Dabei laufen die Zahnriemen endlos um. Die Mitnehmer sorgen dafür, daß die Gegenstände in definierten Abständen auf dem Zahnriemen transportiert werden und dabei nicht verrutschen oder an den Mitnehmern werden Anbauteile befestigt, mit denen bestimmte Arbeitsaufgaben, wie z.B. das Betätigen von Schaltern oder Kurbeitrieben, durchgeführt werden.

Bisher werden die Mitnehmer nachträglich auf dem Rücken der Zahnriemen aufgeschweißt oder die Riemen werden bei ihrer Herstellung mit Mitnehmern gegossen.
Bei hohen dynamischen Belastungen (hohe Beschleunigungen, große zu transportierende Massen) sind die so aufgebrachten Mitnehmer den Anforderungen oft nicht gewachsen, so daß sie in diesen Fällen häufig abreißen.

Der in Anspruch 1 angegebenen Erfindung liegt deshalb die Aufgabe zugrunde, einen Zahnriemenantrieb mit Mitnehmern so auszubilden, daß die Mitnehmer auch bei hohen dynamischen Belastungen nicht aus dem Zahnriemen ausreißen.

Diese Aufgabe wird durch die Verwendung einer den Belastungen angepaßten Verbindungstechnik (Schraubverbindungen, Nietverbindungen u.a.) zusammen mit der besonderen Ausbildung der Riemenscheiben gelöst. Vorteilhafte Ausbildungen der Erfindung sind in den Unteransprüchen dargestellt.

Anschließend wird die Erfindung anhand eines Ausführungsbeispiels näher erläutert.

Dabei zeigen
- FIG 1: eine Seitenansicht eines Zahnriemenantriebes mit einem Mitnehmer und der Schnittdarstellung eines dazugehörigen Befestigungselementes

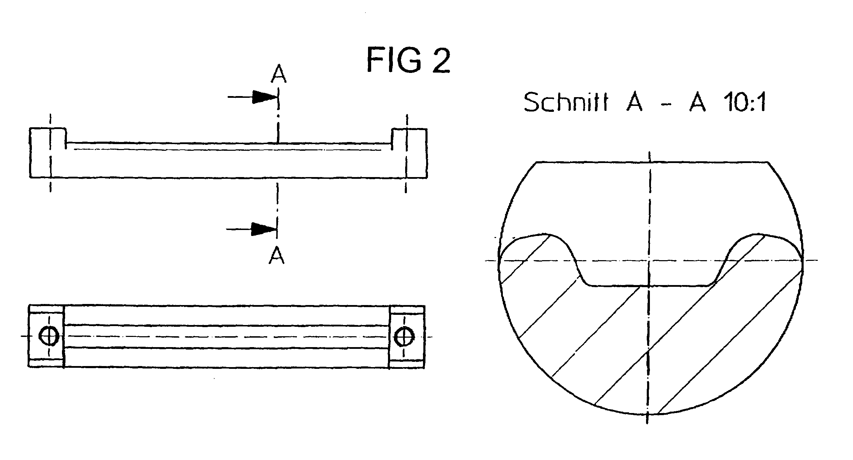

- FIG 2: ein Befestigungselement 2 in Seitenansicht und Draufsicht sowie einer Schnittdarstellung

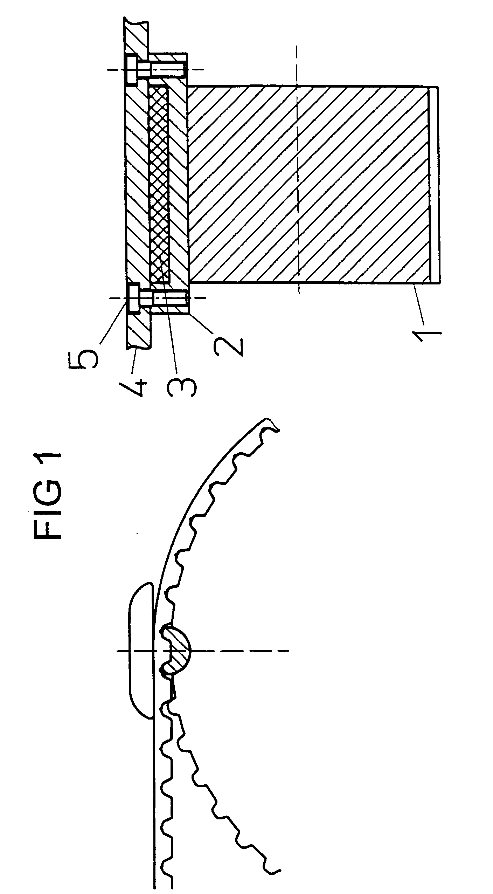

Wie der FIG 1 zu entnehmen ist, wird der jeweilige Mitnehmer 4 stets über einem Zahn des Zahnriemens 3 befestigt. Auf der Zahnseite des Zahnriemens wird über dem ausgewählten Zahn ein Befestigungselement 2 befestigt. Dieses Befestigungselement 2 weist über die gesamte Zahnriemenbreite einen in der Schnittansicht A dargestellten Querschnitt auf. Die den Zahnriemen 3 berührende Oberfläche ist dem Zahnprofil mit beidseitiger Lücke zur Fixierung angepaßt. Stirnseitig ist das Befestigungselement 2 über die Zahnriemenbreite hinaus verlängert. Beide über den Zahnriemen hinausragenden Teile weisen eine in der Ebene des Zahnriemenrückens befindliche Oberfläche auf.

Der am Zahnriemen 3 zu befestigende Mitnehmer 4, der die gleiche Breite wie das Befestigungselement 2 aufweist, ist mit den beiden seitlichen Teilen mittels Schraubverbindungen 5 fest verbunden. Die stabile Verbindung zwischen einem Mitnehmer 4 und dem Zahnriemen 3 wird also durch den Formschluß des Zahnriemens 3 mit dem der Zahnriemenkontur angepaßten Mitnehmer 4 und dem Befestigungselement 2 hergestellt. Der Formschluß wird dabei mittels der Schraubverbindung 5 erzeugt, wobei Nietverbindungen oder Klemmverbindungen ebenfalls möglich sind.

Damit sich der Zahnriemen 3 beim Lauf über die Zahnscheiben 1 nicht von diesen abhebt, weshalb ein sicheres Ineinandergreifen der Zähne nicht mehr gewährleistet ist, weisen die Zahnscheiben 1 entsprechend große Aussparungen für die Befestigungselemente 2 auf. Vorteilhaft, wie in diesem Ausführungsbeispiel realisiert ist, ist die äußere Kontur des Befestigungselementes 2 und die Kontur der Aussparung so komplementär gewählt, daß beim Lauf über der Zahnscheibe 1 das Befestigungselement 2 in einer Aussparung abrollt. Die Teilung der Mitnehmer 4 muß der Teilung der Aussparungen oder einem Vielfachen davon entsprechen.

## Patentansprüche

1. Zahnriemenantrieb mit Mitnehmern (4), **dadurch gekennzeichnet**, daß für jeden Mitnehmer (4) auf der Zahnseite des Zahnriemens (3) ein einen Zahn über die gesamte Breite im Profil sowie stirnseitig umschließendes Befestigungselement (2) vorgesehen ist, das über die Riemenbreite auf beiden Stirnseiten hinausragt, wobei die obere gerade Begrenzung der seitlich herausragenden Teile in der Ebene des Zahnriemenrückens liegt, der jeweilige Mitnehmer (4) mit den beiden seitlichen Teilen des Befestigungselementes (2) zur Herstellung einer formschlüssigen Verbindung zwischen dem Mitnehmer (4), dem Zahnriemen (3) und dem Befestigungselement (2) mittels Verbindungselementen (5) verbunden ist, und die Zahnscheiben (1) entsprechende Aussparungen für die Befestigungselemente (2) aufweisen.

2. Zahnriemenantrieb nach Anspruch 1, **dadurch gekennzeichnet**, daß die auf den Zahnseiten des Zahnriemens (3) befindlichen Befestigungselemente (2) und die Aussparungen in den Zahnscheiben (1) so dimensioniert und geformt sind, daß die Befestigungselemente (2) in den Aussparungen abrollen.

3. Zahnriemenantrieb nach Anspruch 1 oder 2, **dadurch gekennzeichnet**, daß das Verbindungselement (5) aus Schraubelementen besteht.

4. Zahnriemenantrieb nach Anspruch 1 oder 2, **dadurch gekennzeichnet**, daß das Verbindungselement (5) aus Nietelementen besteht.
